# EUROPEAN PATENT APPLICATION

(11) **EP 1 921 842 A1**
(43) Date of publication of application: **14.05.2008**
(21) Application number: 06732547.2
(22) Date of filing: 12.05.2006
(51) Int. Cl.: H04N 5/222

(54) **PEDESTAL**

(30) Priority: 24.06.2005 JP 2005011579
(71) Applicant: I.D.X. Company Ltd, Kawasaki-shi, Kanagawa 214-0021 (JP)
(72) Inventor: KATAYAMA, Hitoshi c/o IDX Company, Ltd., Kawashaki-shi Kanagawa 2140021 (JP)
(74) Representative: Hedman, Anders
(86) International application number: PCT/JP2006/309566
(87) International publication number: WO 2006/137226

(57) **Abstract**

[PROBLEMS] To provide a device capable of enhancing the degree of freedom in movement of a stand such as a pedestal by eliminating the need for a cable for connection to the outside [MEANS FOR SOLVING PROBLEMS] A pedestal (1) for mounting a TV camera (2) has a carriage section (3) having a substantially triangular plane shape and a proper height, a post portion (4) telescopably provided on the carriage section (3), an operation handle (5), and a drive section (7) fixed on the carriage section (3) in order to telescope the post portion (4). One or more batteries (25) for supplying electric power to the TV camera (2) are incorporated in the carriage section (3). Preferably, the one or more batteries (25) are rechargeable and can be detachably attached to the carriage section (3).

## Description

### [Technical Field]

The present invention relates to a mount device called pedestal which when a TV camera, lens, or the like is mounted thereon through a universal head, can change the height of the carried article such as the TV camera by operating an operation handle vertically, wherein, by a rotating operation of the operation handle, the direction of wheels of a carrier car can be changed to move the carried article to a desired position.

### [Background Art]

A conventional mount device capable of moving while carrying thereon a device such as TV camera requiring the supply of electric power, for example, a pedestal (also called pedestal dolly, but hereinafter referred to simply as pedestal) is used in a TV studio or the like. Such a device is provided with a cable for connection between the pedestal and an external power supply, and electric power is supplied to the TV camera through the cable.
[Patent Literature 1]
JP-A-09-093466

### [Disclosure of the Invention]

### [Problem to be Solved by the Invention]

Therefore, when the pedestal is to be moved freely within a TV studio or the like, a restriction on movement range and mode occurs or a staff for operating the cable is needed, for example due to distribution of the cable by crawling or by drawing.

In view of the above-mentioned problem it is an object of the present invention to provide a device capable of dispensing with the cable or the like for external wiring and capable of enhancing the degree of freedom in movement, etc. of a pedestal.

### [Means for Solving the Problem]

According to the invention of claim 1 there is provided a mount device capable of moving while carrying thereon a device requiring the supply of electric power such as a TV camera, the mount device having a battery for the supply of electric power to the TV camera.

According to the invention of claim 2 there is provided a pedestal capable of moving while carrying thereon a TV camera requiring the supply of electric power, the pedestal having a battery for the supply of electric power to the TV camera.

According to the invention of claim 3 there is provided, in combination with the invention of claim 2, a pedestal wherein the battery is disposed within a base portion incapable of telescopic operation.

According to the invention of claim 4 there is provided, in combination with the invention of claim 2, a pedestal wherein the battery is disposed on a base portion incapable of telescopic operation.

### [Effect of the Invention]

According to the present invention, it becomes unnecessary to use a cable or the like for external wiring, the degree of freedom in movement, etc. of a mount device such as a pedestal can be enhanced, and the mount device can be made convenient for use.

### [Brief Description of the Drawings]

Fig. 1 is a perspective view of a pedestal according to an embodiment of the present invention.
Fig. 2 is a perspective view of the pedestal alone in the embodiment illustrated in Fig. 1.
Fig. 3 is a sectional view of the pedestal.
Fig. 4 is a perspective view showing a part of a carrier car portion of the pedestal.
Fig. 5 is a plan view showing an example of a movement mode of the pedestal.

### [Explanation of Reference Numerals]

- 1:: pedestal
- 2:: TV camera
- 3:: carrier car portion
- 4:: post portion
- 5:: operation handle
- 6:: brake handle
- 7:: drive unit
- 8:: wheel
- 9:: clutch operating pedal
- 10:: inner tube
- 11:: intermediate inner tube
- 12:: intermediate tube
- 13:: intermediate outer tube
- 14:: outer tube
- 15:: wire drum
- 16:: lift wire
- 17:: hat
- 18:: cover
- 19:: wing nut
- 20:: rail
- 21:: roller
- 22:: pawl
- 23:: locking pin
- 25:: battery
- 24:: cleaning port
- 26:: wiring for the supply of electric power from battery to TV camera
- 27:: wiring to TV camera

### [Best Mode for Carrying Out the Invention]

The best mode for carrying out the present invention will be described below with reference to an embodiment illustrated in the drawings.

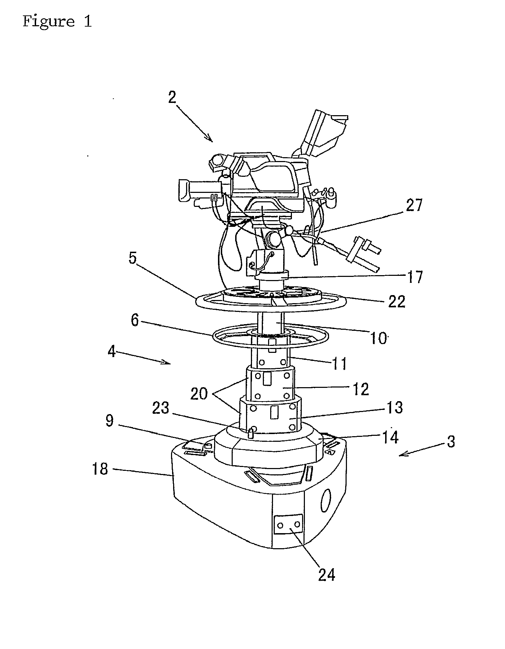

Fig. 1 is a perspective view showing a mount device, more particularly pedestal, according to an embodiment of the present invention. In the same figure, the numeral 1 denotes a pedestal and numeral 2 denotes a TV camera. The TV camera 1 is of a known structure and therefore an explanation thereof is here omitted. As noted above, the article to be carried on the mount device is not limited to the TV camera.

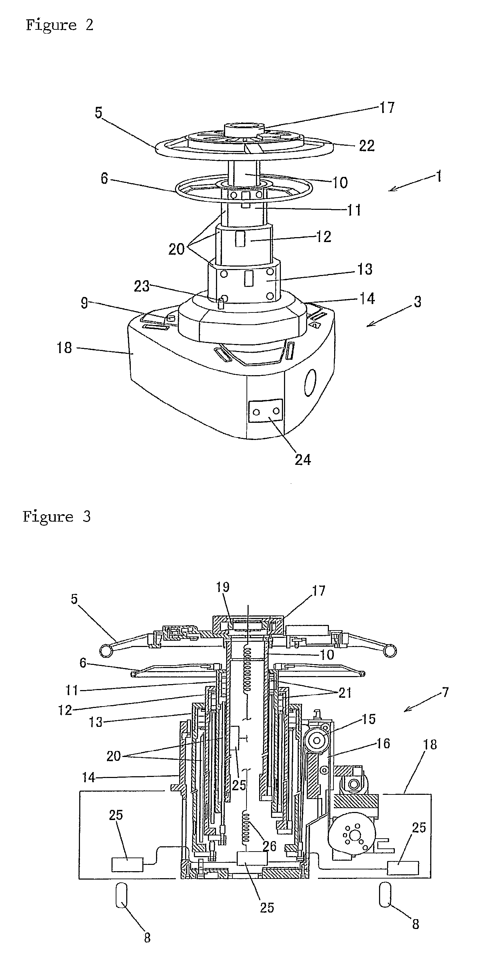

The pedestal 1 is mainly composed of a carrier car portion 3 having a generally triangular plane shape and a suitable height and a post portion 4 mounted for telescopic operation on the carrier car portion 3. An operation handle 5 is disposed at the highest position of the post portion 4 and a brake handle 6 is disposed at an intermediate position. Further, as shown in Fig. 3, a drive unit 7 for telescopic operation of the post portion 4 is mounted over an area from an upper surface of the carrier car portion 3 to a side face of the post portion 4.

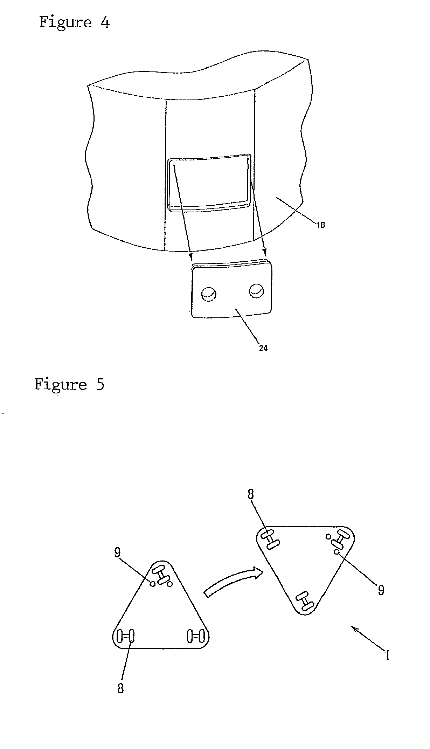

As shown in Fig. 5, the carrier car portion 3 is movable, having three sets of wheels. A TV camera 2 is carried through a universal head or the like onto the post portion 4 which is mounted on the carrier car portion 3. The TV camera 2 is moved up and down by telescopic operation of the post portion 4 and the direction thereof is changed by operating the operation handle 5.

As shown in Fig. 5, wheels 8 are attached respectively to vertex portions of a bottom of the carrier car portion 3 which has a triangular plane shape. The three wheels 8 support the whole of the pedestal 1. A clutch mechanism for switching from one wheel to three wheels or vice versa is disposed near one of the three wheels 8. Although a concrete structure of the clutch mechanism is not shown in the drawing, it may be a conventional mechanism. A clutch operating pedal 9 is provided in the carrier car portion 3. Though not shown, a chain extending from a transmission shaft disposed in the interior of the post portion 4 transmits rotation to the wheel 8 near which the clutch mechanism is disposed. This wheel 8 is adapted to rotate in interlock with the operation handle 5 irrespective of clutch switching. For example, a mechanism is provided such that only when it is selected to steer all the three wheels by a clutch operation, the remaining two wheels also rotate in interlocked condition by means of a pulley on the clutched wheel 8 through a timing belt.

The post portion 4 is provided with a constant output mechanism using a pneumatic cylinder. More specifically, the output of a pneumatic cylinder is utilized for balancing the weight of the carried article. The post portion 4 incorporates a load adjusting mechanism such that a constant output is always obtained at an arbitrary height based on a vertical movement of each of tubes which constitute the post portion 4. As shown in Fig. 3, the tubes which constitute the post portion 4 comprise fiver tubes which are an inner tube 10, an intermediate inner tube 11, an intermediate tube 12, an intermediate outer tube 13 and an outer tube 14. The tubes other than the outer tube 14 are adapted to raise and fall while equal intervals are maintained. More particularly, a lift wire 16 extending from a wire drum 15 lifts the inner tube 10 through the intermediate outer tube 13, intermediate tube 12 and intermediate inner tube 11. A hat 17 is attached to an upper end of the inner tube 10 which is drawn up finally. Any of various universal heads is mounted to the hat 17 and then a TV camera 2 or the like is mounted on the hat 17 through the universal head.

With such a mechanism, the vertical height, elevation angle, depression angle and transverse swing of the TV camera can be changed freely and the TV camera can be moved smoothly in an desired direction. In the drawings the body of the carrier car portion 3 is not shown, but the carrier car portion 3 is shown in a covered state with a cover 18. Although in the illustrated example only an example of three sets of wheels is shown, four or more sets of wheels may be used.

The operation handle 5 is used for raising and lowering the pedestal 1 and for operating the wheels. When the brake handle 6 is turned clockwise in Fig. 2 it is possible to brake the rising and lowering of the tubes 10-13 in the pedestal 1. Since the brake handle 6 also rises and falls together with the tubes 10-13 as does the operation handle 5, not only it can be operated in an easy attitude of the operator, but also can be operated from any position of the pedestal 1. The brake can be released when the brake handle 6 is turned counterclockwise.

The hat 17 is a portion for carrying any of various universal heads on top of the inner tube 10. When a universal head is used, a wing nut provided on the universal head side is removed and a wing nut 19 installed in the interior of the hat 17 is used.

As noted earlier, the tubes 10-14 are adapted to rise and fall at mutually equal intervals. Rails 20 are provided on side faces of the tubes 10-13. The rails 20 serve as faces for movement of rollers 21 which press tubes 10-13.

Though not shown in detail, movable pawls 22 are formed in a disc portion of the operation handle 5 and they come into mesh with three locking pins 23 projecting from the outer tube 14, whereby a vertical movement of the pedestal 1 is locked.

A battery 25 for the supply of electric power to the TV camera 2 is installed in the interior of the carrier car portion 3. The body portion 3 of the pedestal 1 is covered with the carrier car cover 18 which includes cleaning ports 24 for the wheel portions, as shown in Fig. 4. The cleaning ports 24 are provided in the three corners, respectively, of the carrier car cover18. The cleaning ports 18 can be used for the removal of dust, etc. adhered to the wheels 8 and also for the mounting and removal of the battery as will be described later.

One or plural batteries 25 are provided in the interior of the pedestal of such a structure. In the illustrated example, two batteries are provided in the interior of the carrier car portion 3, one in the vicinity of the bottom of the outer tube 14 and one in an intermediate position of the inner tube 10. However, any one of them or all of them will do. The type and number of batteries may be selected so as to permit a required supply of electric power. Preferably a battery (or batteries) capable of being recharged is used as the battery 25 (or batteries). Of course, any other type of battery (or batteries) may be used. Although the cleaning port 24 is described so as to be accessible to only the battery 25 positioned near the inner periphery edge of the carrier car cover 18, a certain position of the cleaning port 24 permits access also to a battery positioned within the outer tube 24. The outer tube 14 may be formed with an aperture in the bottom thereof and access may be made therefrom to the battery 25 disposed within the inner tube 10 or the outer tube 14. Thus, no limitation is made to the illustrated example.

The battery 25 is preferably capable of being mounted to and removed from the carrier car portion 3, but even if a battery is fixed within the carrier car portion 13 and incapable of being removed, it may be used if it is rechargeable, for example, if it can be recharged by connection of an external power supply. A wire 26 for the supply of electric power from the battery 25 to the TV camera 2 may be passed through the interior of the post portion 4 from the interior of the carrier car portion 3 or, though now shown, one end thereof may be exposed to the upper surface of the carrier car portion 3 and connected to the TV camera 2 along the side face of the post portion 4 like the wiring 27 to the TV camera 2. In the illustrated example, a coiled type of wire is used so as not to obstruct telescopic operation of the post portion 4 and go out to the exterior from an upper-end opening of the inner tube 10, but this is a mere example. Without exposure to the exterior, if a terminal for the supply of electric power is provided on the universal head attached to the hat 17, it suffices to provide wiring up to a lower portion of the universal head through the interior of the inner tube 10.

### [Industrial Applicability]

Although the pedestal of the illustrated embodiment is only for carrying a TV camera thereon, the present invention is not limited thereto, but the invention is also applicable to various other mount devices which can move while carrying thereon devices requiring the supply of electric power, e.g., a TV camera. No limitation is made to the illustrated example.

## Claims

1. A pedestal capable of moving while carrying thereon a device such as a TV camera requiring the supply of electric power, said pedestal comprising a battery for the supply of electric power to said device such as a TV camera and wiring for the supply of electric power from said battery to said device such as a TV camera.

2. A pedestal according to claim 1, wherein said battery is disposed within a carrier car portion which is for moving the pedestal.

3. A pedestal according to claim 2, wherein said battery is disposed in a plural number within said carrier car portion.

4. A pedestal according to claim 2 or claim 3, wherein said battery or batteries is or are disposed near an outer periphery edge in the interior of said carrier car portion.

5. A pedestal according to claim 4, wherein an opening/closing portion for mounting, removal and replacement of said battery or batteries is provided in said carrier car portion at a position near the disposed position(s) of the battery or batteries.

6. A pedestal according to claim 1, further comprising a post portion capable of moving up and down while carrying thereon said device such as a TV camera, and said battery is disposed within said post portion.

7. A pedestal according to claim 6, wherein said post portion comprises a plurality of tubes and said battery is disposed within the innermost tube out of said plural tubes.

8. A pedestal according to claim 6, wherein said post portion comprises a plurality of tubes and said battery is disposed within the outermost tube out of said plural tubes.

9. A pedestal according to claim 1, wherein said battery is disposed on a carrier car portion which is for moving the pedestal.

10. A pedestal according to claim 9, wherein said battery is disposed in a plural number on the carrier car portion which is for moving the pedestal.
